# EUROPÄISCHE PATENTANMELDUNG

(11) **EP 2 186 989 A2**
(43) Veröffentlichungstag der Anmeldung: **19.05.2010**
(21) Anmeldenummer: 09014402.3
(22) Anmeldetag: 18.11.2009
(51) Int. Cl.: E06B 9/68

(54) **Motorsteuerung**

(30) Priorität: 18.11.2008 DE 102008058096
(71) Anmelder: Gerhard Geiger GmbH & Co., 74321 Bietigheim-Bissingen (DE)
(72) Erfinder: Dangel, Hans-Michael, 74391 Erligheim (DE)
(74) Vertreter: Jeck, Anton

(57) **Zusammenfassung**

Die Erfindung betrifft eine elektronische Motorsteuerung für einen elektrischen Antrieb von Rollläden, Markisen, Jalousien und vergleichbaren Behängen mit einem Untersetzungsgetriebe, mit der eine Laufwegbegrenzung und eine Hinderniserkennung des Behangs mittels Zählen von Motorumdrehungen und Messen der zugehörigen Periodendauer erfolgen.

## Beschreibung

Die Erfindung betrifft eine elektronische Motorsteuerung für Sonnenschutzvorrichtungen nach dem Oberbegriff des Anspruchs 1.

Elektrische Antriebe für Rollläden, Markisen, Jalousien und vergleichbare Behänge haben in der Regel eine mechanische oder elektronische Motorsteuerung, mit der eine Laufwegbegrenzung des Behangs mittels eines oberen und eines unteren Endpunkts erfolgt. Diese Endpunkte werden bei der Inbetriebnahme der Anlage im Einlernbetrieb des elektrischen Antriebs einmalig fest eingestellt.

Nachteilig ist, dass Behanglängenänderungen durch Temperaturänderungen, Alterung, Feuchtigkeit, Schmutz, Dehnung, geändertes Wickelverhalten usw. zu einer ungewollten Verschiebung der Endpunkte führt. Wird diese Verschiebung zu groß, kann dies die Nutzung einschränken, Beschädigungen des Behangs hervorrufen oder zu optischen Beeinträchtigungen führen. Beispielsweise kann dies bei Kassettenmarkisen dazu führen, dass die Kassette nicht komplett geschlossen wird, wodurch Schmutz, Wasser usw. in die Kassette eindringen können. Im anderen Fall wird die Kassette mit einer zu großen Kraft geschlossen, wodurch das Markisentuch, die Mechanik oder der elektrische Antrieb beschädigt werden können.

Herkömmliche Antriebe für die genannten Anwendungsbereiche bestehen üblicherweise aus einem Einphasen-Kondensator-Asynchronmotor mit Untersetzungsgetriebe. Bei elektronischen Motorsteuerungen wird in der Regel über eine geeignete Sensorik die Anzahl der Motorumdrehungen, die zugehörige Periodendauer pro Umdrehung und damit die Drehzahl des Motors entweder direkt an der schnell laufenden Motorwelle oder am langsam laufenden Getriebeabgang erfasst und für die Laufwegbegrenzung und Hinderniserkennung des Motors ausgewertet.

Asynchronmotoren haben bekanntlich die Eigenschaft, dass bei steigendem Last-Drehmoment die Motordrehzahl sinkt und damit die Periodendauer T pro Umdrehung steigt. Auf Grund dieses Zusammenhangs kann eine Drehmomentabschaltung bzw. Hinderniserkennung des elektrischen Antriebs erfolgen, wobei bei Überschreitung einer Grenzperiodendauer TG bzw. Unterschreitung einer Grenzdrehzahl der elektrische Antrieb abgeschaltet wird. Der beschriebene Abschaltalgorithmus gilt analog bei sinkendem Last-Drehmoment, steigender Motordrehzahl, sinkender Periodendauer T und Unterschreitung einer Grenzperiodendauer TG.

Bei der Inbetriebnahme des Behangs vor Ort durch den Monteur befindet sich die Motorsteuerung in einem Einlernbetrieb, in dem u. a. die Endpunkte bzw. die Drehmomentabschaltung eingelernt werden bzw. wird. Wird z. B. im Einlernbetrieb eine Gelenkarmmarkise geöffnet und dabei über den Knickpunkt der Gelenkarme hinausgefahren, kann es beim erneuten Schließen der Anlage zu einer ungewollten Drehmomentabschaltung im Bereich des starken Drehmomentanstiegs im Knickpunkt kommen, und dies kann als oberer Endpunkt interpretiert werden. Der Monteur hat jetzt nur noch die Möglichkeit, im Bereich des Knickpunkts von Hand nachzuhelfen, so dass der elektrische Antrieb so weit entlastet wird, dass keine Drehmomentabschaltung erfolgt.

Ausgehend von dem obigen Stand der Technik liegt der Erfindung die Aufgabe zugrunde, die eingestellten festen Endpunkte durch eine sich der Situation anpassende Drehmomentabschaltung zu ersetzen, um dadurch Behanglängenänderungen auszugleichen. Eine Kassettenmarkise soll beispielsweise trotz Behanglängenänderungen immer komplett geschlossen werden (Behanglängenausgleich). Dabei soll die Mechanik, das Tuch bzw. der Behang der Sonnenschutzanlage und der Motor geschont und nicht beschädigt werden. Der Endpunkt im ausgefahrenen Zustand soll sich ebenfalls nicht verändern.

Diese Aufgabe wird durch die Merkmale des Anspruchs 1 gelöst.

Man erkennt, dass die Erfindung jedenfalls dann verwirklicht ist, wenn es sich um eine elektronische Motorsteuerung für einen elektrischen Antrieb von Rollläden, Markisen, Jalousien und vergleichbaren Behängen mit einem Untersetzungsgetriebe handelt. Mit dieser elektronischen Motorsteuerung erfolgt eine Laufwegbegrenzung und eine Hinderniserkennung des Behangs mittels Zählen von Motorumdrehungen und Messen der zugehörigen Periodendauer. In der Motorsteuerung werden Ab-, schaltbereiche gespeichert. Die Abschaltbereiche gelten jeweils für die Endanschläge und sind für diese festgelegt. Innerhalb dieser Abschaltbereiche gelten andere Abschaltalgorithmen als im übrigen Laufweg des Behangs.

Weitere zweckmäßige und vorteilhafte Maßnahme der Erfindung gehen aus den Unteransprüchen hervor.

Durch den Anspruch 2 wird erreicht, dass dem Monteur vor Ort auf einfache Art und Weise ohne Zusatzzubehör eine Möglichkeit gegeben wird, die Drehmomentabschaltung der Motorsteuerung an den Behang anzupassen, sofern die Grundeinstellung der Motorsteuerung den Anforderungen nicht genügt. Dies kann notwendig werden, da derselbe elektrische Antrieb in Anlagen unterschiedlicher Abmessungen, Konstruktionen, Toleranzen und baulichen Gegebenheiten vor allem im Bereich der Endpunkte eingebaut werden kann. Es soll optional die Möglichkeit geschaffen werden, dass sich der elektrische Antrieb vollautomatisch selbst einlernt und dabei auch die Drehrichtungszuordnung zu den Bedientasten AUF und AB am Bedienschalter überprüft wird und sich ggf. selbstständig korrigiert.

Eine weitere Ausbildung der Erfindung ist so getroffen, dass der Abschaltalgorithmus durch die Mittellung der Anzahl (N) der zuletzt gemessenen Periodendauern (T) erfolgt und eine Grenzperiodendauer (TG) errechnet wird, wobei dem Ergebnis ein Sicherheitszuschlag (S) hinzuaddiert bzw. von diesem Ergebnis subtrahiert wird, und dass beim Überschreiten bzw. Unterschreiten der Grenzperiodendauer (TG) durch die aktuell gemessene Periodendauer eine Drehmomentabschaltung des elektrischen Antriebs erfolgt.

Gemäß einer weiteren vorteilhaften Ausbildung der Erfindung wird bei Kassettenmarkisen der Wert der Anzahl (N) der Periodendauern im Abschaltbereich kleiner als im Bereich des Laufwegs zwischen den Endpunkten gewählt.

Eine weitere Ausbildung der Erfindung ist **dadurch gekennzeichnet, dass** im Einlernbetrieb der Wert der Anzahl (N) der Periodendauern, ausgehend von einer Voreinstellung, durch wiederholtes Fahren gegen einen Endanschlag durch den Monteur schrittweise verkleinert wird, bis der elektrische Antrieb die Kassette vollständig geschlossen hat, und dass dieser so ermittelte Wert in der Motorsteuerung abgespeichert wird.

Eine weitere vorteilhafte Ausbildung der Erfindung ist so getroffen, dass der Einstellvorgang und damit die Ermittlung des optimalen Werts der Anzahl der Periodendauern im Einlernbetrieb automatisiert und selbstlernend durch die Motorsteuerung erfolgt, dass der optimale Wert genau dann erreicht ist, wenn trotz verkleinerter Anzahl (N) der Periodendauern der Laufweg des Behangs nicht größer wird und dass der vorletzte Wert für die Anzahl (N) in der Motorsteuerung abgespeichert wird.

Durch die Maßnahme des Anspruchs 7 wird erreicht, dass bei einer Gelenkarm-Kassettenmarkise dem Monteur ermöglicht wird, den Behang über den Knickpunkt hinweg nach oben zu fahren, ohne von Hand nachhelfen zu müssen, so dass keine Drehmomentabschaltung erfolgt oder fälschlicherweise ein Endpunkt eingelernt wird. Eine weitere vorteilhafte Ausbildung der Erfindung ist **dadurch gekennzeichnet, dass** im Einlernbetrieb bei einer ungewünschten Drehmomentabschaltung im Knickpunkt der Wert der Anzahl (N) der Periodendauern durch wiederholtes Fahren gegen den Knickpunkt so lange verkleinert wird, bis der elektrische Antrieb den Knickpunkt ohne Drehmomentabschaltung überfährt, und dass, sobald die Motorsteuerung erkennt, dass bei verkleinerter Anzahl (N) der Laufweg stetig größer wird, die Motorsteuerung den Wert der Anzahl (N) auf den Ursprungswert zurücksetzt.

Die Erfindung wird nun anhand des Beispiels einer Kassettenmarkise näher erläutert. Es zeigen:
- Fig. 1: eine schematische Seitenansicht einer Gelenkarm-Kassettenmarkise im ausgefahrenen Zustand,
- Fig.2: eine Schaltungsanordnung für die Kassettenmarkise der Fig. 1,
- Fig. 3a-3d: Schaubilder zur Darstellung des Drehmoments bzw. der Periodendauer in Abhängigkeit vom Behangweg der Kassettenmarkise der Figuren 1, 2,
- Fig. 4: ein Schaubild zur Darstellung von Laufwegbereichen des Behangs der Kassettenmarkise der Figuren 1, 2 und
- Fig. 5: eine Draufsicht auf ein Einstellgerät zur Einstellung der Endlagenabschaltung der Kassettenmarkise der Figuren 1, 2.

Im Folgenden wird mit "Einlernbetrieb" die Betriebsart des elektrischen Antriebs bezeichnet, in der der Monteur die Endpunkte lernen und weitere Einstellungen durchführen kann. Im "Normalbetrieb" wird die Anlage bestimmungsgemäß durch den Endnutzer betrieben.

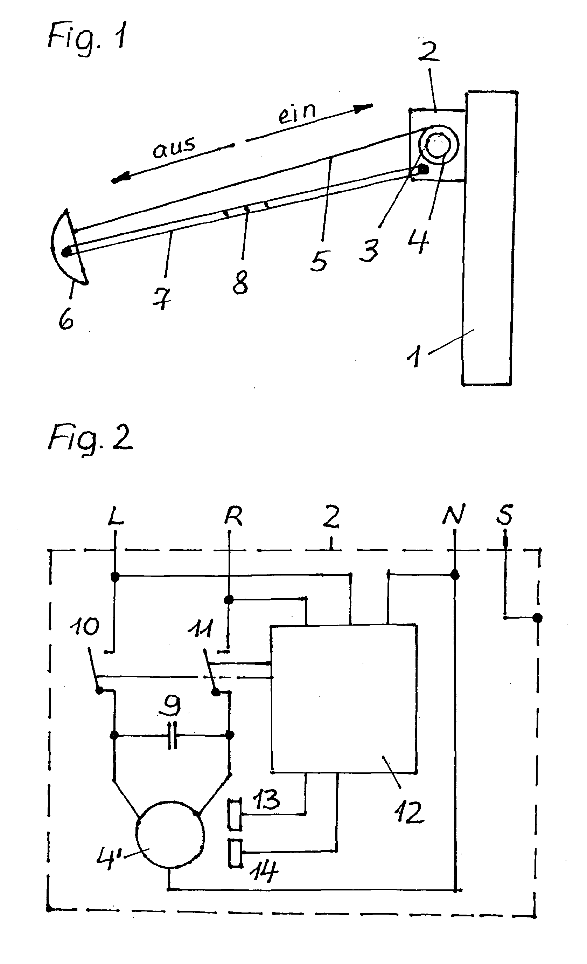

In Fig. 1 ist eine Kassettenmarkise dargestellt, die an einer Wand 1 befestigt ist. Sie weist eine an der Wand 1 angebrachte Kassette 2 auf, in der ein Wickelrohr 3 drehbar gelagert ist. In diesem Wickelrohr ist ein Antrieb 4 angeordnet, der im Wesentlichen aus einem als Asynchronmotor ausgebildeten Rohrmotor (4') mit Thermoschutz und Kondensator (9), einer Bremse und einem Getriebe besteht. Auf dem Wickelrohr 3 kann ein Behang 5, hier ein Markisentuch, aufgewickelt werden, das durch eine Öffnung der Kassette 2 durchtritt und in einem Kassettendeckel 6 endet. Der Kassettendeckel 6 verschließt im eingefahrenen Zustand des Behangs 5 die genannte Öffnung der Kassette 2. Zwischen der Kassette 2 und dem Kassettendeckel 6 sind zwei federbelastete Gelenkarme angebracht, von denen der eine Gelenkarm 7 gezeigt ist, der mit einem Knickgelenk 8 versehen ist. Die Federkräfte sind dabei so gerichtet, dass sie im Sinn des Ausfahrens des Behangs 5 wirken. Ferner weist die Kassettenmarkise an oder in einem Ende eine in Fig. 1 nicht dargestellte Motorsteuerung auf, in der Einstellwerte gespeichert werden können und die beim Erreichen bestimmter Schwellwerte eine elektronische Endabschaltung vornimmt.

In Fig. 2 ist eine zugehörige Schaltungsanordnung für die Kassettenmarkise dargestellt. Die Bedienung des Motors 4' erfolgt über Leitungen L, R für Linkslauf bzw. Rechtslauf und dem Nullleiter N. Die Kassette 2 ist noch mit einem Schutzleiter S verbunden. Am Motor 4' ist zwischen den Leitungen L, R ein Kondensator 9 geschaltet. In den Leitungen L, R ist jeweils ein Schalter 10 bzw. 11 eingeschleift, die durch die Motorsteuerung 12 gesteuert werden. Die Motorsteuerung 12 ist ebenfalls an die Leitungen L, R und N angeschlossen. Ferner sind zwei Sensoren 13, 14 im Motor 4' vorgesehen, die als Hallsensoren ausgebildet sind. Die Sensoren 13, 14 sind um etwa 90° gegeneinander versetzt um den Magneten auf der Motorwelle angeordnet. Bei Verwendung dieser beiden Sensoren werden Fehler bei der Positionsbestimmung vermieden. Diese Hallsensoren geben bei jeder Motorumdrehung einen Impuls ab. Durch Zählen solcher Impulse ist die aktuelle Position des Behangs 5 stets bekannt. Durch Messung der Drehzahl kann indirekt das Drehmoment ermittelt werden.

Die Motorsteuerung 12 überwacht die Motordrehzahl, indem die Periodendauer der Motorumdrehung gemessen und ausgewertet wird. Es kann vom absoluten Schwellwert ausgegangen werden. Von Bedeutung sind auch Messungen von Drehmomenten, der Drehzahl sowie der Periodendauer des Antriebs, die in einem bestimmten Verhältnis zueinander stehen.

Die Überwachung von Parametern des Antriebs kann zur Erkennung von jeweiligen Positionen des Behanges 5 dienen.

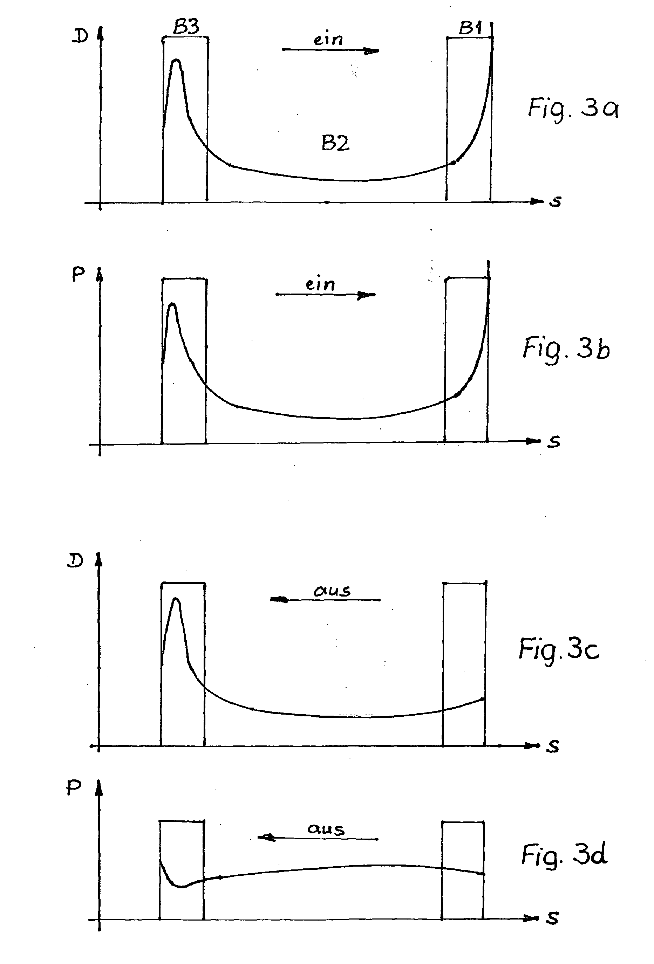

In den Figuren 3a-3d sind die Drehmomentverläufe und die zugehörigen Periodendauern der Motorumdrehung beim Einfahren (Figuren 3a, 3b) und Ausfahren (Figuren 3c, 3d) gezeigt. Die rechten Balkenbereiche B1 beinhalten die eingefahrenen Endlagen, während in den linken Balkenbereichen B3 die ausgefahrenen Endlagen liegen. Zwischen den Balkenbereichen B1, B3 liegen mittlere Bereiche B2.

Beim Einfahren wirkt das Drehmoment der Drehrichtung entgegen. Beim Schließen der Kassette 2 im Bereich B1 steigt das Drehmoment D bzw. die Periodendauer P steil an. Damit die Kassette 2 immer vollständig geschlossen wird, darf die Kraftabschaltung nicht zu empfindlich erfolgen, d. h., dass erst bei höheren Abweichungen vom Sollwert eine Abschaltung möglich sein muss. Im mittleren Bereich B2 ist der Drehmoment- bzw. Periodendauerverlauf flach. Hier kann eine empfindliche Hinderniserkennung stattfinden. Das nötige hohe Drehmoment beim Einknicken des Gelenkarms 7 darf nicht zur Abschaltung des Motors 4' führen. Die Abschaltung im Bereich B3 muss daher unterdrückt werden.

Beim Ausfahren (Figuren 3c, 3d) wirkt das Drehmoment in Drehrichtung. Daher sind Drehmoment D und Periodendauer P umgekehrt proportional zueinander. Das Öffnen der Kassette 2 im Bereich B1 erfolgt durch die Federkraft der Gelenkarme 7. Das Markisentuch (5) muss nur abgewickelt werden. Im mittleren Bereich B2 ist die Periodendauer P nahezu konstant. Eine empfindliche Hinderniserkennung ist möglich. In der ausgefahrenen Endlage im Bereich B3 wird das Markisentuch durch die Gelenkarme 7 besonders stark gezogen. Die Endlage wird durch Abschaltung über Impulse erreicht. Das Drehmoment durch die Gelenkarme 7 wirkt in Drehrichtung. Es kann eine empfindliche Hinderniserkennung verwendet werden.

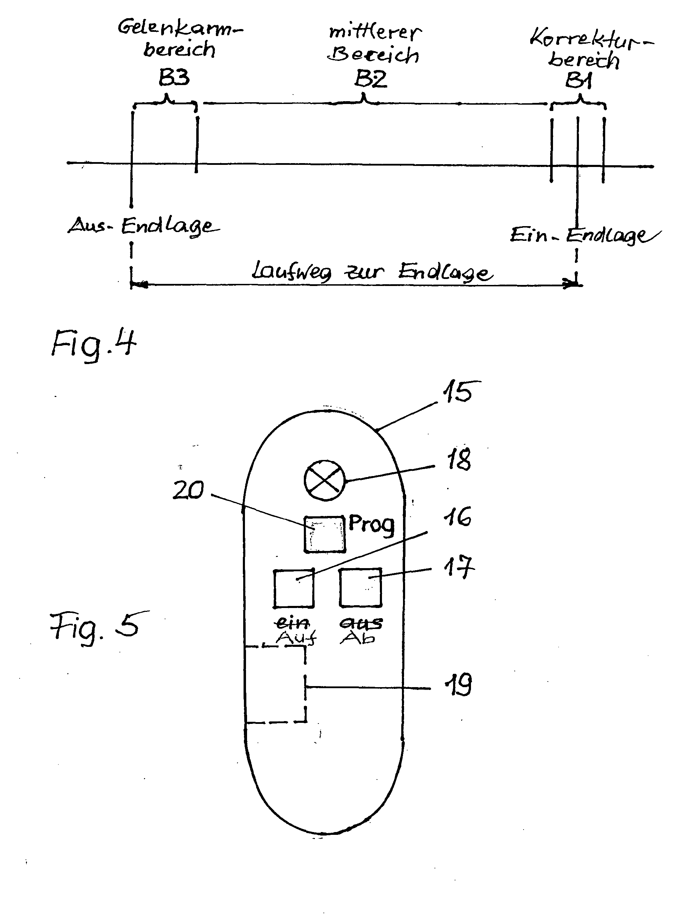

In Fig. 4 sind drei Laufwegbereiche B1, B2, B3, nämlich ein Korrekturbereich B1, ein mittlerer Bereich B2 und ein Gelenkarmbereich B3, schematisch dargestellt, in die der Laufweg von der eingefahrenen Endlage zur ausgefahrenen Endlage eingeteilt ist. Tritt im Bereich B1 eine Antriebsabschaltung auf, so wird sie von der Motorsteuerung 12 nicht als Hindernis sondern als Endanschlag interpretiert, und eine Endlagenkorrektur wird durchgeführt.

Fig. 5 zeigt ein Einstellgerät, das ein tragbares Gehäuse 15 aufweist, in das eine Auftaste 16, eine Abtaste 17, eine Prog.Taste 20, eine als Quittungslampe dienende Anzeigelampe 18 in Form einer LED und ein Sender 19 eingebaut sind. Die Tasten 16, 17 können über Funk mit der Motorsteuerung 12 verbunden werden, während die Taste 20 mit dem Sender 19 verbindbar ist.

Im Folgenden wird der Stofflängenausgleich und die Endlagenkorrektur behandelt. Der Stoff einer Markise kann sich in der Länge ändern. Da das Tuch immer durch die Gelenkarme 7 gespannt wird, wird es mit der Zeit länger. Durch Regen und Sonne kann es sich auch wieder zusammenziehen. Die Motorsteuerung 12 muss diese Veränderungen des Tuchs berücksichtigen und entsprechend kompensieren. Wenn sich der Stoff der Markise verlängert, so wird die Kassette 2 beim Einfahren nicht mehr richtig geschlossen, und die ausgefahrene Endlage wird überfahren. Wenn sich der Stoff der Markise verkürzt, so wird die ausgefahrene Endlage nicht mehr erreicht, und die Kassette 2 ist bereits vor dem Erreichen der Endlage geschlossen. Die eingefahrene Endlage wird als Referenz verwendet. Von dieser Position aus bleibt der Laufweg bis zur ausgefahrenen Endlage immer konstant.

Tritt im Korrekturbereich B1 eine Drehmomentabschaltung auf, so wird die zugehörige Abschaltposition als neue Endlage verwendet. Bezogen auf diese neue eingefahrene Endlage wird die ausgefahrene Endlage so verschoben, dass der Laufweg zur Endlage erhalten bleibt. Tritt im Korrekturbereich B1 keine Drehmomentabschaltung auf, so wird das Ende des Korrekturbereichs B1 als neue Endlage verwendet.

Die Endlagenkorrektur wird bei jedem Einfahren der Kassenmarkise durchgeführt.

Erfindungsgemäß wird die genannte erste Aufgabe dadurch gelöst, dass im Normalbetrieb bei jedem Schließen der Anlage möglichst sanft gegen den Endanschlag gefahren wird, bis die Kassette der Markise vollständig geschlossen ist. Dazu wird im Einlernbetrieb beim Lernen der Endpunkte gegen den oberen Endanschlag gefahren, bis eine Drehmomentabschaltung erfolgt. Die ermittelte Position wird in der Motorsteuerung gespeichert. Um diese Position wird nun ein Abschaltbereich definiert. Dabei wird ein Bereichsanfang und ein Bereichsende festgelegt. Der Bereichsanfang liegt z. B. 100 Inkremente vor dem Endanschlag, während das Bereichsende z. B. 100 Inkremente nach dem Endanschlag liegt. Innerhalb dieses Abschaltbereichs gelten andere Abschaltalgorithmen als im übrigen Laufweg des Behangs. Diese Abschaltalgorithmen müssen den mäßigen Drehmomentanstieg innerhalb des Abschaltbereichs vor dem Endanschlag tolerieren und bei starkem Drehmomentanstieg, sobald der Endanschlag erreicht ist, den Antrieb abschalten.

Dazu wird die Grenzperiodendauer TG errechnet, wobei eine Mittelung der N der zuletzt gemessenen Periodendauern T erfolgt und dem Ergebnis ein Sicherheitszuschlag S hinzuaddiert wird.

Wird N groß gewählt, wird die Grenzperiodendauer TG den augenblicklich gemessenen Periodendauern T und damit dem tatsächlich anstehenden Drehmoment der Anlage träge nachgeregelt, was bei stärkeren Änderungen des Last-Drehmoments (Schließen der Kassette) zu einem sensibleren Abschalten des Antriebs führt. Umgekehrtes gilt für ein klein gewähltes N.

Unabhängig davon kann für alle beschriebenen Zustände auch die Grenzperiodendauer TG für sich allein ohne Mittellung (N=1) ausgewertet werden und bei Über- bzw. Unterschreitung eine Abschaltung erfolgen.

Für die optimale Konfiguration einer Kassettenmarkisenanlage ist es sinnvoll, während des Laufwegs zwischen den Endpunkten außerhalb des Abschaltbereichs N groß und/oder TG klein zu wählen, da hier nur allmähliche Drehmomentänderungen erfolgen. Erscheint ein unvorhergesehenes Hindernis, schaltet die Anlage sensibel ab.

Im oben beschriebenen Abschaltbereich ist es sinnvoll, N so klein und/oder TG so groß zu wählen, dass der Drehmomentanstieg beim Schließen der Kassette noch toleriert wird, der starke Drehmomentanstieg bei komplett geschlossener Kassette aber zur Abschaltung führt. Innerhalb des oben definierten Abschaltbereichs wird dadurch die Kassette unabhängig von Behanglängenänderungen immer ganz geschlossen.

Um die Position des unteren Endpunkts immer konstant zu halten, wird der ursprünglich gelernte Abstand zwischen oberem Endanschlag und unterem Endpunkt auf die zuletzt ermittelte Position des oberen Endanschlags bezogen. Damit ist sichergestellt, dass die Markise vom oberen Endanschlag immer denselben Laufweg und damit dieselbe Wegstrecke bis zur unteren Endlage läuft.

Erfindungsgemäß wird die zweite Aufgabe dadurch gelöst, dass im Auslieferungszustand des elektrischen Antriebs N groß und/oder TG klein gewählt ist (sensibles Abschalten). Im Einlernbetrieb fährt der Monteur die Anlage gegen den oberen Endanschlag. Jetzt ist es möglich, dass der Antrieb abschaltet, bevor die Kassette ganz geschlossen ist. Erfindungsgemäß kann der Monteur im Einlernbetrieb den Behang ein definiertes Stück zurückfahren und erneut gegen den Endanschlag fahren. Dabei verkleinert die Motorsteuerung den Wert N und/oder vergrößert TG um einen bestimmten Betrag selbstständig, wodurch die Abschaltung weniger sensibel erfolgt. Diesen Vorgang wiederholt der Monteur so lange, bis die Kassette vollständig geschlossen ist. Der Wert N und/oder TG wird in der Motorsteuerung gespeichert.

Dieser Vorgang kann auch automatisiert von der Motorsteuerung selbstlernend für beide Endpunkte durchgeführt werden, sofern feste Endanschläge vorhanden sind.

Sobald die Motorsteuerung erkennt, dass trotz verkleinertem N der Laufweg nicht größer wird, ist die Kassette ganz geschlossen.

Die Überprüfung der Drehrichtungszuordnung erfolgt dadurch, dass die gemittelte Periodendauer über einen Teil oder den gesamten Laufweg einmal beim Schließen, zum anderen beim Öffnen ermittelt wird. Die Drehrichtung mit der größeren gemittelten Periodendauer ist die Einfahrbewegung der Anlage, in der die Kassette geschlossen wird.

Eine weitere Möglichkeit besteht darin, dass der Monteur über ein geeignetes Steuerungsmittel, wie z. B. einen Funkhandsender, einen Programmierschalter, Bedienelemente am Motor oder dergleichen, die Möglichkeit hat, N und/oder TG zu verstellen und damit den Bedürfnissen vor Ort anzupassen. Z. B. kann der Antrieb mittels geeigneter Tastenbefehlsfolgen an einem Funkhandsender in einen Zustand gebracht werden, in dem z. B. N und/oder TG durch Drücken der Auftaste schrittweise erhöht und N und/oder TG durch Drücken der Abtaste schrittweise verringert wird.

Erfindungsgemäß wird die dritte Aufgabe dadurch gelöst, dass bei einer Drehmomentabschaltung im Einlernbetrieb vor dem Knickpunkt durch wiederholtes Fahren gegen den Knickpunkt auf die bereits beschriebene Art und Weise N verkleinert wird, bis der Knickpunkt überwunden wird. Sobald die Motorsteuerung erkennt, dass bei verkleinertem N der Laufweg stetig größer wird, ist klar, dass hier der Knickpunkt überwunden wurde, der Motor weiterläuft und die Kassette nicht geschlossen wurde. Jetzt kann N auf den Ursprungswert zurückgesetzt werden, so dass beim Schließen der Kassette am oberen Endanschlag wieder zuerst sensibel abgeschaltet wird.

Eine weitere Möglichkeit besteht darin, dass beim Einlernen der Endlagen zuerst der untere Endpunkt eingelernt wird. Vor bzw. beim Einlernen des unteren Endpunkts sind keine oder nur sehr unsensible Abschaltalgorithmen wirksam, so dass der Knickpunkt jederzeit überwunden werden kann. Nachdem der untere Endpunkt eingelernt wurde, sind sensiblere Abschaltalgorithmen aktiv, da normalerweise dann gegen den oberen Endanschlag gefahren und damit der obere Endpunkt eingelernt werden soll. Wird aber versehentlich in die Ausfahrrichtung gefahren und der Knickpunkt dabei überlaufen, wird beim anschließenden Versuch, den Knickpunkt in Einfahrrichtung zu überwinden, fälschlicherweise der obere Endpunkt eingelernt. Gelöst wird dieses Problem dadurch, dass z. B. mittels eines Funkhandsenders die Markise im Einlernbetrieb für eine gewisse Zeit nur im Totmannbetrieb bewegt werden kann und nach Ablauf dieser Zeit die Markise in Selbsthaltung geht und damit selbständig weiterfährt. Während des Totmannbetriebs gelten keine oder sehr unsensible Abschaltalgorithmen, so dass über den Knickpunkt gefahren werden kann. Sobald die Markise automatisch weiterfährt (Selbsthaltung), gelten die sensiblen Abschaltalgorithmen, so dass die Markise sanft gegen den oberen Endanschlag fährt und den oberen Endpunkt einlernt.

Zusätzlich kann nach dem Einlernen des unteren Endpunkts um diesen ein Knickpunktbereich definiert werden, der durch einen Bereichsanfang und ein Bereichsende definiert ist. Der Bereichsanfang kann z. B. 1000 Inkremente vor dem Knickpunkt liegen, während das Bereichsende z. B. 1000 Inkremente nach dem Knickpunkt liegen kann. Innerhalb dieses Knickpunktbereichs liegt der Knickpunkt sicher, und es gelten keine oder nur sehr unsensible Abschaltalgorithmen. Die Bereichsgröße wird auf die Anwendung abgestimmt und ist in der Motorsteuerung voreingestellt. Wird nun zum Einlernen des oberen Endpunkts nach oben gefahren, kann der Knickpunkt ohne weiteres überfahren werden, da er sich noch innerhalb des oben genannten Knickpunktbereichs befindet. Sobald der Antrieb diesen Knickpunktbereich verlässt und ggf. der Funkhandsender länger als drei Sekunden gedrückt wurde und in Selbsthaltung gegangen ist, schaltet der Antrieb beim Erreichen des oberen Endanschlags sensibel ab.

## Patentansprüche

1. Elektronische Motorsteuerung für Sonnenschutzvorrichtungen, z. B. Markisen, Rollläden, Jalousien, Behänge, mit einer Laufwegbegrenzung sowie Hinderniserkennung einer hin und her verfahrbaren Sonnenschutzpartie, **gekennzeichnet durch**
einstellbare sowie speicherbare Abschaltalgorithme der Arbeits- und/oder Ruhepositionen der Sonnenschutzpartie.

2. Motorsteuerung nach Anspruch 1, bei der die Laufwegbegrenzung sowie die Hinderniserkennung der Sonnenschutzpartie mittels Zählen von Motorumdrehungen und Messen der zugehörigen Periodendauer erfolgt,
**dadurch gekennzeichnet,**
**dass** der Abschaltbereich sowie die Arbeitsparameter des Motors im Einlernbetrieb extern festlegbar ist, indem der elektrische Antrieb gegen den Endanschlag fährt, wobei eine Drehmomentabschaltung des elektrischen Antriebs durch die Motorsteuerung veranlasst wird, die Abschaltposition in der Motorsteuerung abgespeichert wird und die Motorsteuerung den Abschaltbereich so festlegt, dass die Abschaltposition sich innerhalb des Abschaltbereichs befindet.

3. Motorsteuerung nach Anspruch 1 oder 2,
**dadurch gekennzeichnet,**
**dass** in der Motorsteuerung der Behang in mindestens zwei Bereiche, nämlich einem Korrekturbereich (B1) und einem mittleren Bereich (B2) eingeteilt ist, dass der Korrekturbereich (B1) um die eingefahrene Endlage gelegt ist und dass in diesem Korrekturbereich eine Antriebsabschaltung erst bei höheren Drehmomenten (D) bzw. Periodendaueranstiegen erfolgt, als sie bei denen des mittleren Bereichs (B2) möglich sind.

4. Motorsteuerung nach Anspruch 1 bis 3,
**dadurch gekennzeichnet,**
**dass** der Abschaltalgorithmus durch die Mitteilung der Anzahl (N) der zuletzt gemessenen Periodendauern (T) erfolgt und eine Grenzperiodendauer (TG) errechnet wird, wobei dem Ergebnis ein Sicherheitszuschlag (S) hinzuaddiert bzw. von diesem Ergebnis subtrahiert wird, und dass beim Überschreiten bzw. Unterschreiten der Grenzperiodendauer (TG) durch die aktuell gemessene Periodendauer eine Drehmomentabschaltung des elektrischen Antriebs erfolgt.

5. Motorsteuerung nach einem der Ansprüche 1 bis 4,
**dadurch gekennzeichnet,**
**dass** bei Kassettenmarkisen der Wert der Anzahl (N) der Periodendauern im Abschaltbereich kleiner als im Bereich des Laufwegs zwischen den Endpunkten gewählt wird.

6. Motorsteuerung nach einem der Ansprüche 1 bis 5,
**dadurch gekennzeichnet,**
**dass** im Einlernbetrieb der Wert der Anzahl (N) der Periodendauern, ausgehend von einer Voreinstellung, durch wiederholtes Fahren gegen einen Endanschlag durch den Monteur schrittweise verkleinert wird, bis der elektrische Antrieb die Kassette vollständig geschlossen hat, und dass dieser so ermittelte Wert in der Motorsteuerung abgespeichert wird.

7. Motorsteuerung nach Anspruch 6,
**dadurch gekennzeichnet,**
**dass** der Einstellvorgang und damit die Ermittlung des optimalen Werts der Anzahl (N) der Periodendauern im Einlernbetrieb automatisiert und selbstlernend durch die Motorsteuerung erfolgt, dass der optimale Wert genau dann erreicht ist, wenn trotz verkleinerter Anzahl (N) der Periodendauern der Laufweg des Behangs nicht größer wird, und dass der vorletzte Wert für die Anzahl (N) in der Motorsteuerung abgespeichert wird.

8. Motorsteuerung nach einem der Ansprüche 1 bis 7 für eine Gelenkarm-Kassettenmarkise,
**dadurch gekennzeichnet,**
**dass** in der Motorsteuerung der Behangweg einen dritten Bereich (B3) aufweist, der um die ausgefahrene Endlage gelegt ist, und dass in diesem Bereich ein höheres Drehmoment einsetzbar ist und dabei die Motorsteuerung nicht die Antriebsabschaltung veranlasst.

9. Motorsteuerung nach Anspruch 8,
**dadurch gekennzeichnet,**
**dass** im Einlernbetrieb bei einer ungewünschten Drehmomentabschaltung im Knickpunkt der Wert der Anzahl (N) der Periodendauern durch wiederholtes Fahren gegen den Knickpunkt so lange verkleinert wird, bis der elektrische Antrieb den Knickpunkt ohne Drehmomentabschaltung überfährt, und dass, sobald die Motorsteuerung erkennt, dass bei verkleinerter Anzahl (N) der Laufweg stetig größer wird, die Motorsteuerung den Wert der Anzahl (N) auf den Ursprungswert zurücksetzt.
